# EUROPEAN PATENT APPLICATION

(11) **EP 4 831 962 A1**
(43) Date of publication of application: **28.10.2026**
(21) Application number: 26171566.8
(22) Date of filing: 10.04.2026
(51) Int. Cl.: G08G 1/16, B60W 30/09, B60W 30/18, B60W 30/095, B60W 60/00, G05D 1/24, G05D 1/43, G06V 20/56, G06V 20/58

(54) **MOBILE BODY CONTROL SYSTEM, CONTROL METHOD THEREFOR, MOBILE BODY, AND COMPUTER PROGRAM**

(30) Priority: 15.04.2025 JP 2025067018
(71) Applicant: HONDA MOTOR CO., LTD., Tokyo 105-8404 (JP)
(72) Inventor: NAKAMURA, Taichi, Wako-shi, Saitama, 3510193 (JP); AIZAWA, Koki, Wako-shi, Saitama, 3510193 (JP); IWATANI, Ryo, Wako-shi, Saitama, 3510193 (JP); MATSUNAGA, Hideki, Wako-shi, Saitama, 3510193 (JP)
(74) Representative: Kiwit, Benedikt

(57) **Abstract**

A mobile body control system that controls an operation of a mobile body acquires an image of an outside world of the mobile body traveling in a first direction toward an intersection region, determines, based on the image, a size of the intersection region and a position and a speed of a second mobile body traveling in a second direction intersecting the first direction toward the intersection region; and determines a risk of collision between the second mobile body located at the position and the mobile body based on a condition that one of the mobile body and the second mobile body escapes from the intersection region before the other enters the intersection region. The mobile body uses the size of the intersection region and the speed at classified stage to determine the risk of collision with the second mobile body.

## Description

### BACKGROUND OF THE INVENTION

### Field of the Invention

The present invention relates to a mobile body control system, a control method therefor, a mobile body, and a computer program.

### Description of the Related Art

In recent years, small mobile bodies (also referred to as micro mobility vehicles) for supporting movement of people in small regions have been known. Some of such mobile bodies have an autonomous movement technology of a free space such as a sidewalk that is a region where a pedestrian moves, in addition to an autonomous driving technology for traveling on a roadway (Japanese Patent Laid-Open No. 2024-064218). In such a mobile body, since the mobile body travels in both the movement region of a vehicle and the movement region of a pedestrian, the mobile body is required to appropriately travel in various regions using images without using a high precision map given in advance.

Incidentally, the mobile body needs to safely travel in a region (intersection region) where the mobile body intersects with a general vehicle, such as a parking entrance on a sidewalk or an intersection on a roadway, even when there is no traffic light. However, when the outside world is recognized using an image, information necessary for collision avoidance such as a size of the intersection region and a speed of general vehicles may not be accurately estimated.

### SUMMARY OF THE INVENTION

The present invention has been made in view of the above problems, and an object of the present invention is to implement a technology capable of appropriately determining whether a collision between a mobile body and another mobile body will occur in an intersection region.

The present invention in its first aspect provides an mobile body control system as specified in claims 1 to 8.

The present invention in its second aspect provides a mobile body as specified in claim 9.

The present invention in its third aspect provides a control method for a mobile body control system as specified in claim 10.

The present invention in its fourth aspect provides a computer program as specified in claim 11.

### BRIEF DESCRIPTION OF THE DRAWINGS

FIGS. 1A and 1B are diagrams illustrating a configuration example of a mobile body according to an embodiment of the present invention;
FIG. 2 is a block diagram illustrating a configuration example of a control system of the mobile body according to the embodiment;
FIG. 3 is a block diagram illustrating a functional configuration example related to a control unit of the mobile body according to the embodiment;
FIG. 4 is a diagram schematically illustrating an example of an intersection region according to the embodiment;
FIG. 5A is a diagram illustrating a condition related to a collision according to the embodiment;
FIG. 5B is a diagram illustrating an example of a dangerous region according to the embodiment;
FIG. 6 is a flowchart illustrating a series of operations of collision avoidance processing according to the embodiment;
FIG. 7 is a diagram (Part 1) schematically illustrating an example of determining an intersection region on a roadway according to an embodiment;
FIG. 8 is a diagram (Part 2) schematically illustrating the example of determining an intersection region on the roadway according to the embodiment; and
FIG. 9 is a diagram (Part 3) schematically illustrating the example of determining an intersection region on the roadway according to the embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

In the following embodiments, a case where a micro mobility vehicle is used as an example of a mobile body will be described as an example. The micro mobility vehicle may be an electric vehicle having a riding capacity of about one person, or may be a vehicle that travels together with a person carrying baggage instead of being boarded by the person. The present embodiment is not limited to an example in which the mobile body is an electric vehicle, and is applicable to any mobile body other than an electric vehicle. Furthermore, in the following description, a mobile body having one driven wheel will be described as an example, but the mobile body does not necessarily have the driven wheel, and the number of driven wheels is not limited to one, and may be two or more. Furthermore, the mobile body is not limited to a vehicle, and may include a robot capable of autonomous movement (for example, capable of walking).

### <Configuration of mobile body>

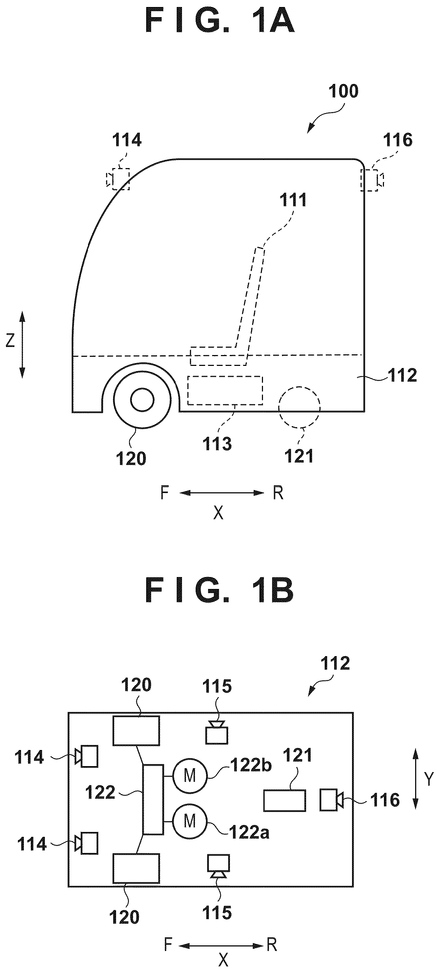

A configuration of a mobile body 100 will be described with reference to FIGS. 1A and 1B. FIG. 1A is a side view of the mobile body 100 according to the present embodiment. FIG. 1B illustrates an internal configuration of the mobile body 100. In the drawings, an arrow X indicates a front-and-rear direction of the mobile body 100, F indicates the front, and R indicates the rear. An arrow Y indicates a width direction (a left-and-right direction) of the mobile body 100, and an arrow Z indicates an up-and-down direction of the mobile body 100.

The mobile body 100 includes a traveling unit 112 and autonomously moves using a battery 113 as a main power supply. The battery 113 is, for example, a secondary battery such as a lithium ion battery, and the mobile body 100 autonomously travels by the traveling unit 112 with electric power supplied from the battery 113. The traveling unit 112 has a form of a three-wheeled vehicle provided with a pair of left and right drive wheels 120, which are front wheels, and one driven wheel 121, which is a rear wheel. The traveling unit 112 may have another form such as a form of a four-wheeled vehicle. The mobile body 100 is provided with, for example, a one-person seat 111.

The traveling unit 112 includes a drive mechanism 122. The drive mechanism 122 is a mechanism that rotates the corresponding drive wheels 120 with motors 122a and 122b serving as drive sources. By rotating each of the drive wheels 120, the drive mechanism 122 can move the mobile body 100 forward or backward. The drive mechanism 122 can also change an advancing direction of the mobile body 100 by generating a difference in rotation between the motors 122a and 122b. The traveling unit 112 includes the driven wheel 121. The driven wheel can make a turn using a Z direction as a rotation axis.

The mobile body 100 includes detection units 114 to 116 that each detect a target around the mobile body 100. The detection units 114 to 116 form an external sensor group that monitors the periphery of the mobile body 100. In a case of the present embodiment, each of the detection units 114 to 116 is an imaging device that captures an image around the mobile body 100, and includes, for example, an optical system such as a lens and an image sensor. However, instead of or in addition to the imaging device, a radar or light detection and ranging (LiDAR) can also be used.

For example, two detection units 114 are arranged in front portions of the mobile body 100 to be spaced apart from each other in the Y direction, and are mainly used to detect a target in front of the mobile body 100. The detection units 115 are arranged in left and right portions of the mobile body 100 and are mainly used to detect targets on the sides of the mobile body 100. The detection unit 116 is arranged in a rear portion of the mobile body 100 and is mainly used to detect a target behind the mobile body 100.

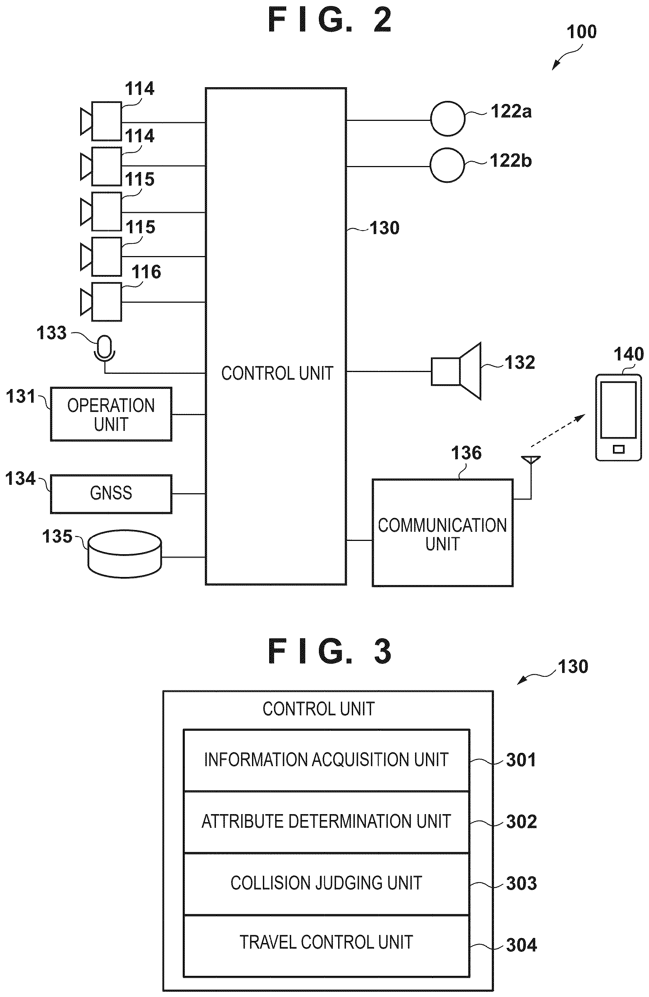

FIG. 2 is a block diagram illustrating a control system of the mobile body 100. The mobile body 100 includes a control unit (ECU) 130. A control unit 130 includes one or more processors represented by a CPU, a memory device (storage medium) such as a semiconductor memory, and an interface with an external device. The memory device stores a program to be executed by the processor, data to be used for processing by the processor and the like. A plurality of sets of processors, memory devices, and interfaces may be provided for each function of the mobile body 100 so as to be able to communicate with each other.

The control unit 130 acquires outputs (for example, images) of the detection units 114 to 116, input information to the operation unit 131, voice information from a voice input device 133, and the like, and executes processing according to each piece of information. The control unit 130 performs control of the motors 122a and 122b (travel control of the traveling unit 112) and display control of a display panel included in the operation unit 131, gives a notification to an occupant of the mobile body 100 by voice, and outputs information. The control unit 130 may perform processing using a machine learning model for image recognition (for example, a deep neural network) on the images from the detection units 114 to 116. The control unit 130 may execute processing using a machine learning model for voice recognition (for example, a deep neural network) on the voice information from the voice input device 133.

A voice output device 132 includes, for example, a speaker, and outputs a voice in response to an instruction from the control unit 130. The voice input device 133 includes, for example, a microphone, and collects voice audio of an occupant of the mobile body 100. The control unit 130 can recognize the input voice and execute corresponding processing. A Global Navigation Satellite system (GNSS) sensor 134 receives a GNSS signal and detects a current position of the mobile body 100.

A storage device 135 includes a nonvolatile memory medium that stores various types of data. The storage device 135 may also store a program to be executed by the processor, data to be used by the processor for processing, and the like. The storage device 135 may store various parameters (for example, trained parameters, hyperparameters, and the like of a deep neural network) of a machine learning model for voice recognition or image recognition to be executed by the control unit 130.

A communication device 136 is a communication device capable of communicating with an external device (for example, a communication terminal 140 owned by a user) via wireless communication, such as Wi-Fi or 5th generation mobile communication.

Next, a functional configuration example related to the control unit 130 will be described with reference to FIG. 3. The control unit 130 includes, for example, an information acquisition unit 301, an attribute determination unit 302, a collision judging unit 303, and a travel control unit 304.

The information acquisition unit 301 acquires a user instruction input via the operation unit 131 or the voice input device 133. The user instruction includes designation of a final target position at which the mobile body 100 is to arrive. The final target position may be a position of a target designated by a spoken voice among targets recognized in the images output by the detection units 114 to 116. The user instruction may include a change instruction for a traveling trajectory such as right turn, left turn, acceleration, or deceleration during traveling of the mobile body 100.

The information acquisition unit 301 acquires outputs (for example, an image) of the detection units 114 to 116, and recognizes a position, a shape, and the like of a traveling path and an obstacle based on the image. The recognition of the position, the shape, and the like of the traveling path and the obstacle in front of the mobile body 100 includes, for example, obtaining of a distance of a depth from the mobile body 100 using the image obtained from the detection unit 114. The recognition of the traveling path or the obstacle includes using a machine learning model (for example, a deep neural network) for image recognition learned in advance for a monocular image or a stereo image.

For example, information acquisition unit 301 recognizes a boundary (edge) of a sidewalk, a boundary of a roadway, and stop lines disposed on the a roadway and the sidewalk from the image. The information acquisition unit 301 can recognize a distance between sidewalk boundaries, a distance between roadway boundaries, a position of a stop line (for example, a relative position from the mobile body 100), and the like. The information acquisition unit 301 can recognize another mobile body other than the mobile body 100 from the image, and can recognize the position (for example, the relative position from the mobile body 100) and a movement speed of the mobile body.

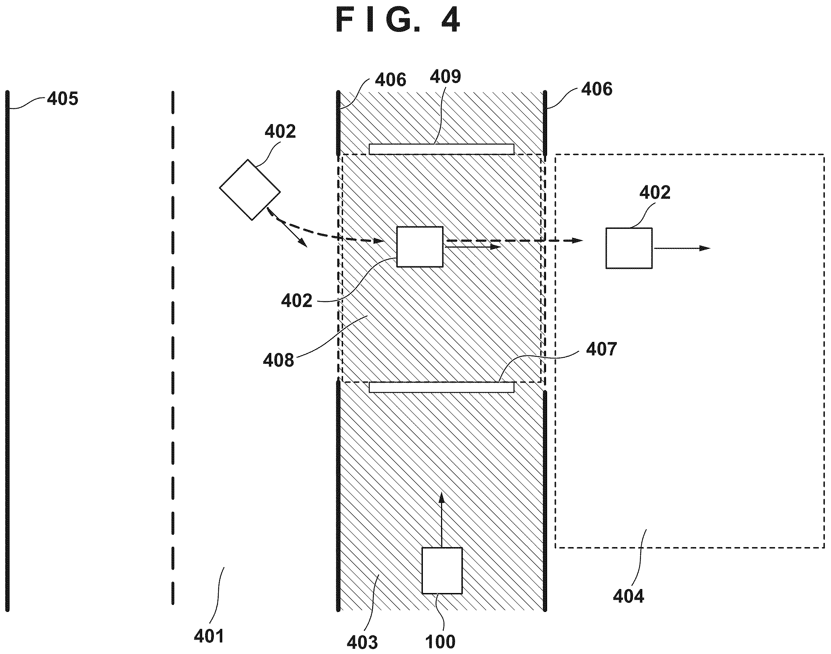

An intersection region where the mobile body 100 according to the present embodiment travels will be described with reference to FIG. 4. In the example of the intersection region illustrated in FIG. 4, there is an intersection region on the sidewalk. For example, there are a roadway 401 and a sidewalk 403 adjacent to the roadway 401. Furthermore, for example, a parking lot 404 is adjacent to the sidewalk 403. At this time, the vehicle 402 is traveling in the first direction toward the intersection region. On the other hand, another mobile body (for example, the vehicle 402) traveling on the roadway 401 is traveling in the second direction intersecting the first direction. That is, the vehicle 402 is moving toward the parking lot 404 across an intersection region 408 of the sidewalk 403. In the sidewalk 403, a stop line 407 indicating a start position and a stop line 409 indicating an end position of the intersection region 408 are formed.

In the example illustrated in FIG. 4, the information acquisition unit 301 can recognize a boundary 405 of the roadway 401, boundaries 406 of two sidewalks, and the stop line 407 from the image. The information acquisition unit 301 can recognize a distance between the boundaries 406 of the sidewalk 403, a distance between boundaries of roadway 401, a position of the stop line 407 (for example, a relative position from the mobile body 100), and the like. Assume that the information acquisition unit 301 cannot recognize the stop line 409 on the far side of the mobile body 100 from the image, for example, because the stop line is not included in the image or a region of the stop line is small.

The attribute determination unit 302 determines an attribute of another mobile body (the vehicle 402) and attribute of the intersection region 408 based on the image. For example, the attribute determination unit 302 determines a size of the intersection region 408 and a position and a speed of the vehicle 402 traveling in the second direction toward the intersection region 408.

Since the stop line 409 is not recognized from the image, the attribute determination unit 302 sets a predetermined distance from the position of the stop line recognized from the image as a distance in the first direction of the intersection region 408. The attribute determination unit 302 sets a distance between boundaries 406 of a lane (the sidewalk 403) on which the mobile body 100 travels as the distance in the second direction of intersection region 408. Accordingly, even when the stop line 409 on the far side of the mobile body 100 cannot be recognized from the image, the size of the intersection region 408 can be determined based on the image. The size of the intersection region when the mobile body 100 travels on the sidewalk can be determined from the image.

The attribute determination unit 302 determines the attribute (a position and a speed) of the vehicle 402 traveling in the second direction toward the intersection region based on the image. For example, the attribute determination unit 302 sets the position of the vehicle 402 as a distance from the mobile body 100. The attribute determination unit 302 classifies the speed of the vehicle 402 in the second direction into any of a plurality of stepwise speeds. In general, when the vehicle 402 in an image is subjected to homography transformation and is arranged on a bird's-eye view as illustrated in FIG. 4, and a movement speed of the vehicle 402 disposed on the bird's-eye view is estimated, an error is often large. Therefore, in the present embodiment, the speed of the vehicle 402 in the second direction is classified into a plurality of stepwise speeds such as "stop", "low speed", and "medium speed".

For example, when a speed v of the vehicle 402 in the second direction is 0 km/h <=v<2 km/h, the attribute determination unit 302 classifies the speed as "stop". When the speed v of the vehicle 402 in the second direction is 2 km/h <=v<6 km/h, the attribute determination unit 302 classifies the speed as "low speed". When the speed v of the vehicle 402 in the second direction is 6 km/h <=v, the attribute determination unit 302 classifies the speed as "medium speed".

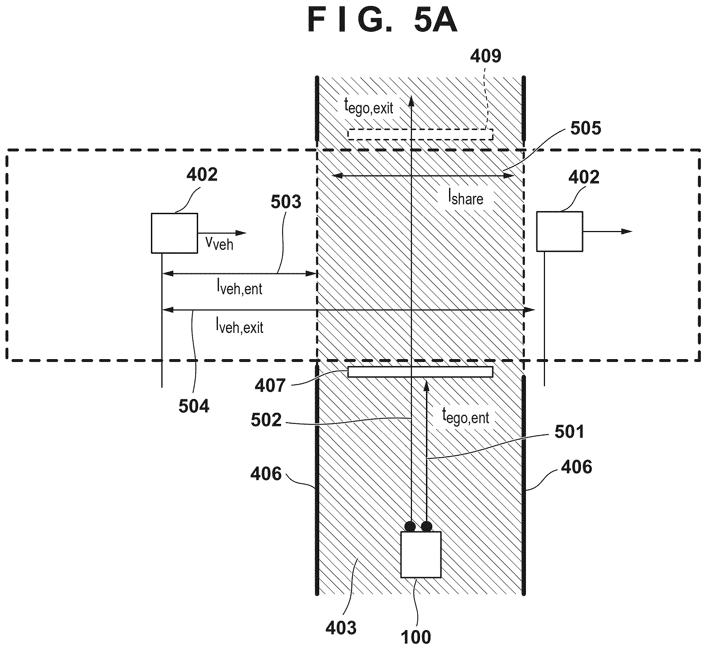

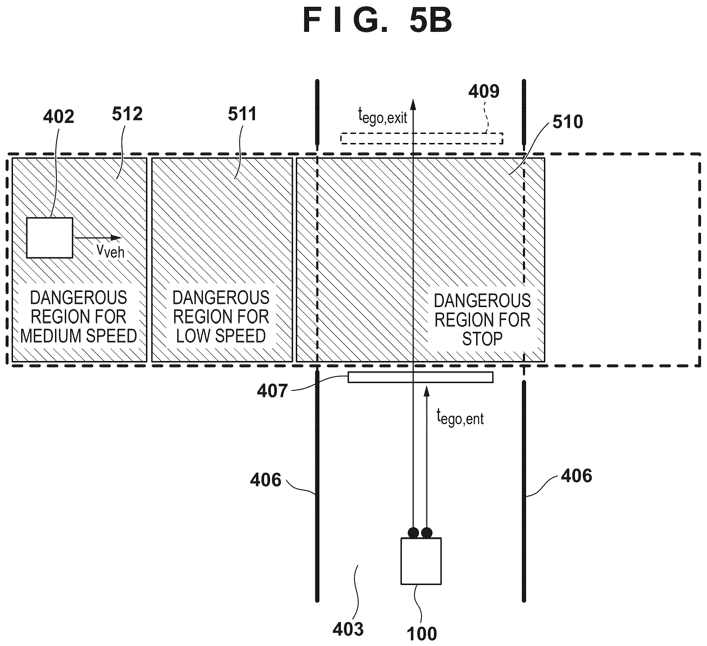

The collision judging unit 303 determines a risk of collision between the mobile body 100 and the vehicle 402 located at the estimated position in the intersection region 408 based on a condition that one of the vehicle 402 and the mobile body 100 escapes from the intersection region 408 before the other enters the intersection region 408. The determination by the collision judging unit 303 will be described with reference to FIGS. 5A and 5B.

vᵥₑₕ is a speed at which the vehicle 402 travels in the second direction. Furthermore, t_{ego,ent} is a first time 501 until the mobile body 100 enters the intersection region 408, and t_{ego,exit} is a second time 502 until the mobile body 100 exits from the intersection region 408. l_{veh,ent} is a distance 503 until the vehicle 402 enters the intersection region 408, and l_{veh,exit} is a distance 504 until the vehicle 402 exits from the intersection region 408. lₛₕₐᵣₑ is the distance 505 in the second direction of the intersection region 408. Furthermore, t_{ego,ent} and t_{ego,exit} are calculated from the movement speed obtained from the drive mechanism 122 of the mobile body 100, the distance to the stop line 407, and the size of the intersection region 408.

In order to prevent the mobile body 100 and the vehicle 402 from colliding in the intersection region 408, the own vehicle preceding condition according to Formula (1) and the other vehicle preceding condition according to Formula (2) are satisfied.
[Math. 1] ${v}_{veh} {t}_{ego , exit} < {l}_{veh , ent}$ (1) [Math. 2] ${v}_{veh} {t}_{ego , ent} > {l}_{veh , exit} = {l}_{veh , ent} + {l}_{share}$ (2)

On the other hand, based on these conditions, a condition under which there is a possibility of the mobile body 100 and the vehicle 402 colliding with each other in the intersection region 408 (the risk increases) is expressed in Formula (3).
[Math. 3] ${v}_{veh} {t}_{ego , ent} < {l}_{veh , exit} < {v}_{veh} {t}_{ego , exit} + {l}_{share}$ (3)

In other words, a distance traveled by the vehicle 402 in a time until the mobile body 100 enters the intersection region 408 is shorter than the distance 504 (the vehicle 402 exists in the intersection region 408), and a distance traveled by the vehicle 402 in the time until the mobile body 100 exits the intersection region 408 is longer than the distance 503.

Next, the degree of risk according to the present embodiment will be described with reference to FIG. 5B. As described above, since an error of the speed of the vehicle 402 is large, there is a problem that accurate collision determination becomes difficult. Therefore, in the present embodiment, a dangerous region corresponding to a plurality of stepwise speeds (for example, stop, a low speed, a medium speed, and the like) is set based on the collision condition shown in Formula (3).

The collision judging unit 303 sets a dangerous region corresponding to a plurality of stepwise speeds (the low speed and the like) based on the speed in the second direction, the first time until the mobile body 100 enters the intersection region 408, the second time until the mobile body 100 exits from the intersection region 408, and the size of the intersection region 408. For example, when the speed of the vehicle 402 is "stop" and there is the vehicle 402 in a dangerous region 510 for stop, the possibility of collision increases. Alternatively, when the speed of the vehicle 402 is "low speed" and there is the vehicle 402 in a dangerous region 511 for the low speed, the possibility of collision increases. Furthermore, when the speed of the vehicle 402 is "medium speed" and there is the vehicle 402 in a dangerous region 512 for the medium speed, the possibility of collision increases. In this way, the collision judging unit 303 determines that there is a possibility of collision (risk is high) when the position of the vehicle 402 is in a dangerous region (for example, a dangerous region for the low speed) corresponding to the classified speed (for example, the low speed) in the set dangerous region. On the other hand, when the position of the vehicle 402 is not in the dangerous region (for example, the low-speed dangerous region) corresponding to the classified speed (for example, the low speed) in the set dangerous region, the collision judging unit 303 determines that the possibility of collision is low (the risk is low). In this way, even when accuracy of the estimated speed of the vehicle 402 is low, the possibility of collision (risk) can be determined using the position of the vehicle which can be calculated with higher accuracy.

The travel control unit 304 controls whether to stop before the intersection region 408 or to enter the intersection region 408 according to a determination result of the risk by the collision judging unit 303. For example, when the collision judging unit 303 determines that there is a possibility of collision, the travel control unit 304 performs control such that the mobile body 100 stops before the intersection region 408. On the other hand, when the collision judging unit 303 determines that the possibility of collision is low (risk is low), the travel control unit 304 performs control such that the mobile body 100 enters the intersection region 408.

### <Series of Operations of Collision Avoidance Processing in Mobile Body>

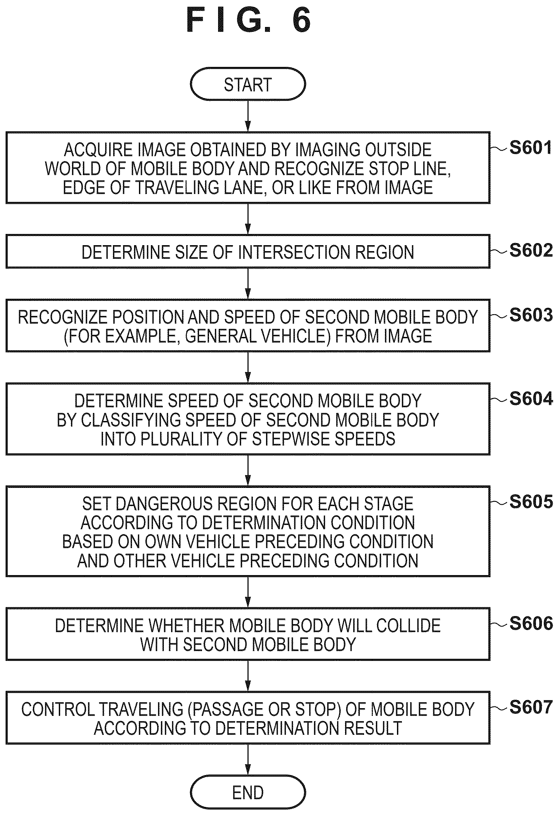

Next, a series of operations of the collision avoidance processing in the mobile body 100 will be described with reference to FIG. 6. The present processing is implemented when the control unit 130 loads and executes the program stored in the storage device 135 on a memory device of the control unit 130.

In S601, the information acquisition unit 301 of the control unit 130 acquires an image obtained by imaging the outside world of the mobile body from the detection units 114 to 116. For example, using the deep neural network, the information acquisition unit 301 recognizes the boundary of the sidewalk, the boundary of the roadway, and the stop lines arranged on the roadway and the sidewalk from the image as described above, and recognizes a distance between the boundaries of the sidewalk, a distance between the boundaries of the roadway, and a position of the stop line (for example, the relative position from the mobile body 100).

In S602, the attribute determination unit 302 of the control unit 130 determines the size of the intersection region 408. As described above, the attribute determination unit 302 sets, for example, a predetermined distance from the position of the stop line recognized from the image as the distance of the intersection region 408 in the first direction. The attribute determination unit 302 sets a distance between boundaries 406 of a lane (the sidewalk 403) on which the mobile body 100 travels as the distance in the second direction of intersection region 408.

In step S603, as described above, the information acquisition unit 301 recognizes, from the image, information regarding the mobile body other than the mobile body 100 (the second mobile body, for example, the vehicle 402), and recognizes the position (for example, a relative position from the mobile body 100) and a speed of the second mobile body.

In S604, the attribute determination unit 302 classifies the speed of the second mobile body as one of a plurality of stepwise speeds. For example, the attribute determination unit 302 classifies the speed of the vehicle 402 in the second direction as one of a plurality of stepwise speeds such as "stop", "low speed", or "medium speed".

In S605, the collision judging unit 303 of the control unit 130 sets a dangerous region for each stage according to a determination condition based on the own vehicle preceding condition and the other vehicle preceding condition. For example, the collision judging unit 303 sets dangerous regions corresponding to a plurality of stepwise speeds (for example, stop, a low speed, a medium speed, and the like) in accordance with Formula (3) described above.

In S606, the collision judging unit 303 determines whether the mobile body 100 will collide with the second mobile body (for example, the vehicle 402). For example, when the speed of the vehicle 402 is "stop" and the vehicle 402 is in the dangerous region 510 for the stop, the collision judging unit 303 determines that a possibility of collision occurrence is high.

In S607, the travel control unit 304 of the control unit 130 controls traveling of the mobile body 100 according to the determination result. For example, as described above, when the collision judging unit 303 determines that there is a possibility of collision, the travel control unit 304 performs control such that the mobile body 100 stops before the intersection region 408. On the other hand, when the collision judging unit 303 determines that the possibility of collision is low (risk is low), the travel control unit 304 performs control such that the mobile body 100 enters the intersection region 408. When the traveling of the mobile body 100 is controlled, the control unit 130 ends the series of processes.

In the above-described embodiment, a case where a possibility of collision in the intersection region 408 on the sidewalk 403 is determined has been described as an example. However, the present embodiment is similarly applicable to a case where a possibility of collision in the intersection region on the roadway is determined.

The intersection region on the roadway is larger than the intersection region 408 on the sidewalk 403 in some cases, and it is conceivable that the size of the intersection region cannot be determined at a time. Therefore, as the mobile body 100 approaches the intersection region, the size of the intersection region may be reset.

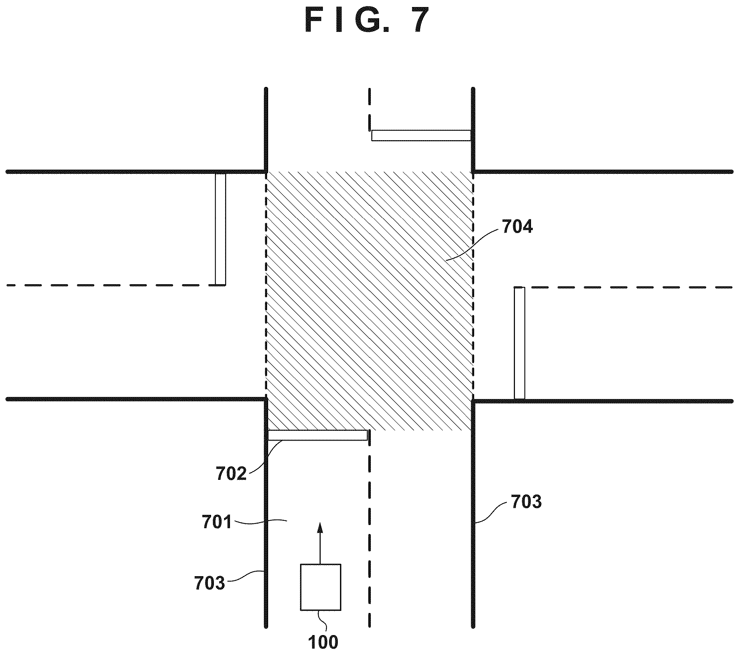

For example, as illustrated in FIG. 7, when the mobile body 100 travels on a roadway 701, the attribute determination unit 302 determines a predetermined distance from the position of the first stop line 702 as a distance in the first direction of the intersection region 704 in response to recognition of the first stop line 702 close to the mobile body 100 from the image. At this time, in response to recognition of boundaries 703 of a roadway on which the mobile body 100 travels from the image, the attribute determination unit 302 sets the distance between the boundaries 703 of the roadway 701 on which the mobile body 100 travels as a distance in the second direction of the intersection region 704.

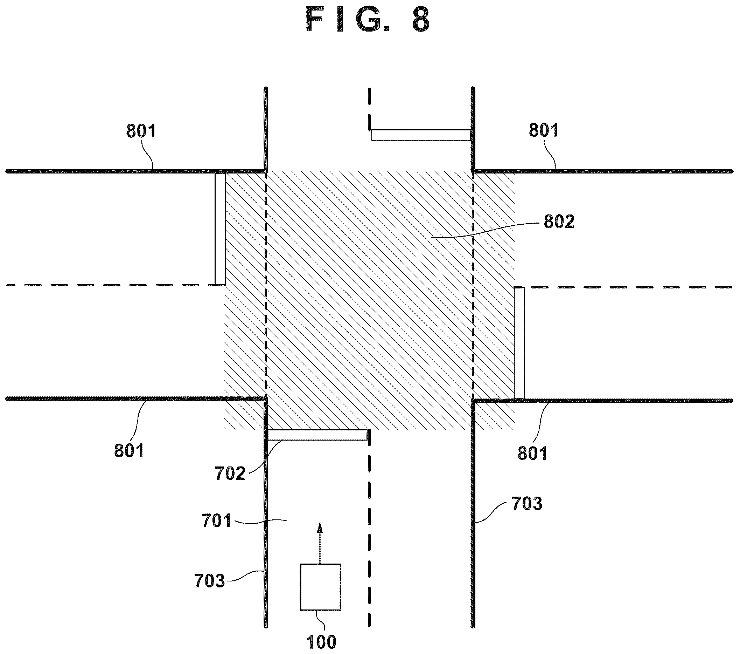

FIG. 8 schematically illustrates an intersection region 802 after the mobile body 100 travels toward the intersection region and a part of the second roadway can be recognized from the image. The attribute determination unit 302 corrects the distance in the second direction of the intersection region 704 using information regarding boundaries 801 of the second roadway in response to recognition of the boundaries 801 of the second roadway intersecting the roadway 701 from the image. The corrected intersection region is the intersection region 802 illustrated in FIG. 8. For example, the attribute determination unit 302 expands the width of the intersection region 802 along the boundaries 801 of the second roadway.

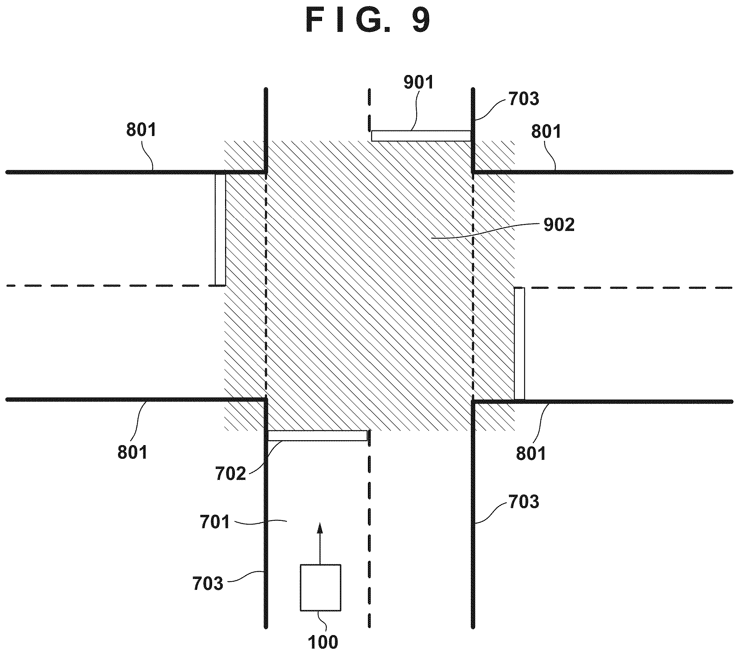

FIG. 9 schematically illustrates an intersection region 902 after the mobile body 100 further travels toward the intersection region and a second stop line 901 at a position farther than the first stop line 702 can be recognized from the image. The attribute determination unit 302 sets a distance between the first stop line 702 and the second stop line 901 as a distance in the first direction of the intersection region 902 in response to recognition of the second stop line at a position farther than the first stop line from the image. In this way, even when the size of the intersection region is large and the size of the intersection region cannot be determined from the image at a time, the size of the intersection region can be corrected in sequence while the mobile body 100 travels.

The configuration of the above-described control unit 130 may function in various forms as a mobile body control system. For example, the mobile body control system may be configured in a form in which at least a part of the above-described control unit 130 is configured on a device outside of the mobile body 100, for example, an external server. That is, the present embodiment is also applicable to a case where the mobile body 100 is remotely controlled from a device separate from the mobile body 100. Alternatively, the mobile body control system may be the mobile body 100 or may be incorporated into the mobile body 100 (that is, may be the control unit 130). A computer program causing the above-described mobile body 100 to operate may be a computer program causing one or more computers to function as each unit of the mobile body control system.

### <Summary of Embodiments>

### (Configuration 1)

A mobile body control system that controls an operation of a mobile body (100), the mobile body control system comprising:
acquisition means (301) for acquiring an image obtained by imaging an outside world of the mobile body traveling in a first direction toward an intersection region;
determination means (302) for determining, based on the image, a size of the intersection region (408, 704) and a position and a speed of a second mobile body (402) traveling in a second direction intersecting the first direction toward the intersection region; and
judging means (303) for determining a risk of collision between the second mobile body located at the position and the mobile body in the intersection region based on a condition that one of the mobile body and the second mobile body escapes from the intersection region before the other enters the intersection region,
wherein the determination means classifies a speed of the second mobile body in the second direction into one of a plurality of stepwise speeds (510, 511, 512), and
wherein the judging means uses the size of the intersection region determined based on the image and the speed at classified stage for determination of the condition to determine the risk of collision with the second mobile body located at the position in the intersection region.

According to this configuration, it is possible to appropriately determine a collision risk between a mobile body and another mobile body in an intersection region.

### (Configuration 2)

The mobile body control system according to configuration 1, wherein the determination means determines the size of the intersection region using a position of a stop line recognized from the image and a boundary of a lane on which the mobile body travels.

According to this configuration, it is possible to determine the size of the intersection region from the image.

### (Configuration 3)

The mobile body control system according to configuration 1 or 2, wherein the determination means determines the size of the intersection region by setting a predetermined distance from a position of a stop line recognized from the image as a distance of the intersection region in the first direction and setting a distance between boundaries of lanes where the mobile body travels as a distance of the intersection region in the second direction.

According to this configuration, even when the stop line 409 on the far side of the mobile body 100 cannot be recognized from the image, the size of the intersection region 408 can be determined based on the image. The distance in the second direction of the intersection region can be easily determined from the image.

### (Configuration 4)

The mobile body control system according to any one of configuration 1 to configuration 3, wherein, when the mobile body travels on a sidewalk, the determination means determines the size of the intersection region using a position of a stop line recognized from the image and a boundary of the sidewalk on which the mobile body travels.

According to this configuration, it is possible to determine the size of the intersection region when mobile body 100 travels on the sidewalk from the image.

### (Configuration 5)

The mobile body control system according to any one of configuration 1 to configuration 4,
wherein, when the mobile body travels on a roadway,
the determination means sets a predetermined distance from a position of a first stop line as a distance of the intersection region in the first direction in response to recognition of the first stop line close to the mobile body from the image, and
then sets a distance between the first stop line and a second stop line as a distance of the intersection region in the first direction in response to recognition of the second stop line at a position farther than the first stop line from the image.

According to this configuration, even when the size of the intersection region is large and the size of the intersection region cannot be determined from the image at a time, the size of the intersection region can be sequentially corrected while the mobile body 100 travels.

### (Configuration 6)

The mobile body control system according to any one of configuration 1 to configuration 5,
wherein, when the mobile body travels on a roadway,
the determination means sets a distance between boundaries of roadways on which the mobile body travels as a distance of the intersection region in the second direction in response to recognition of a boundary of a roadway on which the mobile body travels from the image, and
then corrects a distance of the intersection region in the second direction using information regarding a boundary of a second roadway in response to recognition of the boundary of the second roadway intersecting the roadway from the image.

According to this configuration, accuracy of the width of the intersection region can be improved over time. Even when the size of the intersection region is large and the size of the intersection region cannot be determined from the image at a time, the size of the intersection region can be corrected in sequence while the mobile body 100 travels.

### (Configuration 7)

The mobile body control system according to any one of configuration 1 to configuration 6,
wherein the judging means
sets a dangerous region corresponding to a plurality of stepwise speeds based on a size of the intersection region, a speed in the second direction, a first time taken for the mobile body to enter the intersection region, and a second time taken for the mobile body to escape from the intersection region, and
determines the risk based on a dangerous region corresponding to the classified speed in the set dangerous region and a position of the second mobile body.

According to this configuration, even when accuracy of the estimated speed of the vehicle 402 is low, the possibility of collision (risk) can be determined using the position of the vehicle which can be calculated with higher accuracy.

### (Configuration 8)

The mobile body control system according to any one of configuration 1 to configuration 7,
wherein the condition indicates that there is a risk of collision between the mobile body and the second mobile body in the intersection region when Formula (3) is satisfied, and
wherein
   [Math. 4] ${v}_{veh} {t}_{ego , ent} < {l}_{veh , exit} < {v}_{veh} {t}_{ego , exit} + {l}_{share}$ (3)
vᵥₑₕ is a speed in the second direction, t_{ego,ent} and t_{ego,exit} are respectively a first time until the mobile body enters the intersection region and a second time until the mobile body exits from the intersection region, l_{veh,ent} is a distance until the second mobile body enters the intersection region, and lₛₕₐᵣₑ indicates a distance in the second direction of the intersection region.

According to this configuration, it is possible to determine the possibility of collision (risk) mainly using information obtained from the image.

### (Configuration 9)

A mobile body (100) comprising:
acquisition means (301) for acquiring an image obtained by imaging an outside world of the mobile body traveling in a first direction toward an intersection region;
determination means (302) for determining, based on the image, a size of the intersection region (408, 704) and a position and a speed of a second mobile body (402) traveling in a second direction intersecting the first direction toward the intersection region;
judging means (303) for determining a risk of collision between the second mobile body located at the position and the mobile body in the intersection region based on a condition that one of the mobile body and the second mobile body escapes from the intersection region before the other enters the intersection region; and
control means for controlling whether to stop before the intersection region or to enter the intersection region in accordance with a determination result of the risk,
wherein the determination means classifies a speed of the second mobile body in the second direction into one of a plurality of stepwise speeds (510, 511, 512),
wherein the determination means classifies a speed of the second mobile body in the second direction into one of a plurality of stepwise speeds, and
wherein the determination means uses the size of the intersection region determined based on the image and the speed at classified stage for determination of the condition to determine the risk of collision with the second mobile body located at the position in the intersection region.

According to this configuration, it is possible to appropriately determine the collision between the mobile body and another mobile body in the intersection region and appropriately control passage or stop of the intersection region.

The invention is not limited to the foregoing embodiments, and various variations/changes are possible within the spirit of the invention.

## Claims

1. A mobile body control system that controls an operation of a mobile body (100), the mobile body control system comprising:
acquisition means (301) for acquiring an image obtained by imaging an outside world of the mobile body traveling in a first direction toward an intersection region;
determination means (302) for determining, based on the image, a size of the intersection region (408, 704) and a position and a speed of a second mobile body (402) traveling in a second direction intersecting the first direction toward the intersection region; and
judging means (303) for determining a risk of collision between the second mobile body located at the position and the mobile body in the intersection region based on a condition that one of the mobile body and the second mobile body escapes from the intersection region before the other enters the intersection region,
wherein the determination means classifies a speed of the second mobile body in the second direction into one of a plurality of stepwise speeds (510, 511, 512), and
wherein the judging means uses the size of the intersection region determined based on the image and the speed at classified stage for determination of the condition to determine the risk of collision with the second mobile body located at the position in the intersection region.

2. The mobile body control system according to claim 1, wherein the determination means determines the size of the intersection region using a position of a stop line recognized from the image and a boundary of a lane on which the mobile body travels.

3. The mobile body control system according to any one of the preceding claims, wherein the determination means determines the size of the intersection region by setting a predetermined distance from a position of a stop line recognized from the image as a distance of the intersection region in the first direction and setting a distance between boundaries of lanes where the mobile body travels as a distance of the intersection region in the second direction.

4. The mobile body control system according to any one of the preceding claims, wherein, when the mobile body travels on a sidewalk, the determination means determines the size of the intersection region using a position of a stop line recognized from the image and a boundary of the sidewalk on which the mobile body travels.

5. The mobile body control system according to any one of the preceding claims,
wherein, when the mobile body travels on a roadway,
the determination means sets a predetermined distance from a position of a first stop line as a distance of the intersection region in the first direction in response to recognition of the first stop line close to the mobile body from the image, and
then sets a distance between the first stop line and a second stop line as a distance of the intersection region in the first direction in response to recognition of the second stop line at a position farther than the first stop line from the image.

6. The mobile body control system according to any one of the preceding claims,
wherein, when the mobile body travels on a roadway,
the determination means sets a distance between boundaries of roadways on which the mobile body travels as a distance of the intersection region in the second direction in response to recognition of a boundary of a roadway on which the mobile body travels from the image, and
then corrects a distance of the intersection region in the second direction using information regarding a boundary of a second roadway in response to recognition of the boundary of the second roadway intersecting the roadway from the image.

7. The mobile body control system according to any one of the preceding claims,
wherein the judging means
sets a dangerous region corresponding to a plurality of stepwise speeds based on a size of the intersection region, a speed in the second direction, a first time taken for the mobile body to enter the intersection region, and a second time taken for the mobile body to escape from the intersection region, and
determines the risk based on a dangerous region corresponding to the classified speed in the set dangerous region and a position of the second mobile body.

8. The mobile body control system according to any one of the preceding claims,
wherein the condition indicates that there is a risk of collision between the mobile body and the second mobile body in the intersection region when Formula (3) is satisfied, and
wherein
[Math. 5] ${v}_{veh} {t}_{ego , ent} < {l}_{veh , exit} < {v}_{veh} {t}_{ego , exit} + {l}_{share}$ (3)
vᵥₑₕ is a speed in the second direction, t_{ego,ent} and t_{ego,exit} are respectively a first time until the mobile body enters the intersection region and a second time until the mobile body exits from the intersection region, l_{veh,ent} is a distance until the second mobile body enters the intersection region, and lₛₕₐᵣₑ indicates a distance in the second direction of the intersection region.

9. A mobile body (100) comprising:
acquisition means (301) for acquiring an image obtained by imaging an outside world of the mobile body traveling in a first direction toward an intersection region;
determination means (302) for determining, based on the image, a size of the intersection region (408, 704) and a position and a speed of a second mobile body (402) traveling in a second direction intersecting the first direction toward the intersection region;
judging means (303) for determining a risk of collision between the second mobile body located at the position and the mobile body in the intersection region based on a condition that one of the mobile body and the second mobile body escapes from the intersection region before the other enters the intersection region; and
control means for controlling whether to stop before the intersection region or to enter the intersection region in accordance with a determination result of the risk,
wherein the determination means classifies a speed of the second mobile body in the second direction into one of a plurality of stepwise speeds,
wherein the determination means classifies a speed of the second mobile body in the second direction into one of a plurality of stepwise speeds (510, 511, 512), and
wherein the determination means uses the size of the intersection region determined based on the image and the speed at classified stage for determination of the condition to determine the risk of collision with the second mobile body located at the position in the intersection region.

10. A control method for a mobile body control system that controls an operation of a mobile body, the control method including:
acquiring an image obtained by imaging an outside world of the mobile body traveling in a first direction toward an intersection region,
determining, based on the image, a size of the intersection region and a position and a speed of a second mobile body traveling in a second direction intersecting the first direction toward the intersection region, and
determining a risk of collision between the second mobile body located at the position and the mobile body in the intersection region based on a condition that one of the mobile body and the second mobile body escapes from the intersection region before the other enters the intersection region,
wherein the determining the size of the intersection region and the position and the speed of a second mobile body includes classifying a speed of the second mobile body in the second direction into one of a plurality of stepwise speeds, and
wherein the determining the risk of collision includes using the size of the intersection region determined based on the image and the speed at classified stage for determination of the condition to determine the risk of collision with the second mobile body located at the position in the intersection region.

11. A computer program comprising instructions for performing a control method for a mobile body control system that controls an operation of a mobile body, the control method including:
acquiring an image obtained by imaging an outside world of the mobile body traveling in a first direction toward an intersection region,
determining, based on the image, a size of the intersection region and a position and a speed of a second mobile body traveling in a second direction intersecting the first direction toward the intersection region, and
determining a risk of collision between the second mobile body located at the position and the mobile body in the intersection region based on a condition that one of the mobile body and the second mobile body escapes from the intersection region before the other enters the intersection region,
wherein the determining the size of the intersection region and the position and the speed of a second mobile body includes classifying a speed of the second mobile body in the second direction into one of a plurality of stepwise speeds, and
wherein the determining the risk of collision includes using the size of the intersection region determined based on the image and the speed at classified stage for determination of the condition to determine the risk of collision with the second mobile body located at the position in the intersection region.
